Europäisches Patentamt

European Patent Office

Office européen des brevets

(19)

(11) Publication number: **0 417 883 A2**

# (12) EUROPEAN PATENT APPLICATION

(21) Application number: **90306213.1**

(22) Date of filing: **07.06.90**

(51) Int. Cl.⁵: **G06F 3/023**, G06F 3/033, G06F 15/20

The title of the invention has been amended (Guidelines for Examination in the EPO, A-III, 7.3).

(30) Priority: **19.06.89 US 368468**

(43) Date of publication of application:
**20.03.91 Bulletin 91/12**

(84) Designated Contracting States:
**DE FR GB IT**

(71) Applicant: **International Business Machines Corporation**
**Old Orchard Road**
**Armonk, N.Y. 10504(US)**

(72) Inventor: **Beitel, Bradley James**
**17222 Skyline Boulevard**
**Woodside, California 94062(US)**
Inventor: **Gordon, Robert Douglas**
**1321 Lennox Way**
**Sunnyvale, California 94087(US)**
Inventor: **Smith, Kenneth Bradley**
**758 Holly Oak Drive**
**Palo Alto, California 94303(US)**
Inventor: **Wilkes, Michael David**
**5832 Tributary Ridge Drive**
**Austin, Texas 78759(US)**

(74) Representative: **Harris, Ian Richard**
**IBM United Kingdom Limited Intellectual Property Department Hursley Park**
**Winchester, Hants. SO21 2JN(GB)**

(54) **Data processing system with enhanced ease of use.**

(57) A data processing system employing a display technique for enhancing the human factors of the user interface of an interactive data processing system in which the possibility of simultaneous display of information pertaining to a plurality of data sets is possible, by uniquely, graphically, visually, highlighting displayed information pertaining to each of the plurality of files such that in response to user selection of an active file, information pertaining to the active file is displayed in the file unique highlight, while information pertaining to all other of the plurality of data sets is displayed in a de-highlighted mode.

FIG. 1

EP 0 417 883 A2

## DATA PROCESSING SYSTEM

This invention relates to a data processing system wherein operator ease of use is enhanced permitting simultaneous processing of multiple data files.

The invention finds particular, though not exclusive, application to the editing of a plurality of digitized audio data files which include voice, music and stereo data, hereinafter referred to as audio objects.

A method is described for displaying information relating to editing operations on audio objects in such a way that provides increased simplicity of recognition of active object data for both novice and experienced audio technicians and users of a system.

The recording of sound tracks has, in the past, been accomplished by analog devices such as tape recorders. Editing of the sound recordings or sound means by splicing tapes or by the recording or bouncing of sound tracks or portions thereof from one track or tape recorder to another, thereby making the editing changes during this process.

With the advent of analog-to-digital and digital-to-analog converters, digital signal processors, and the like being applied to the audio recording arts, efforts have been made to provide editing of the audio information while in digital form by means of various digital processing systems. A typical common place application of such digital data processing, although the data is not sound data, is in the digital data processing associated with various computerized text processors or editors. These text editors convert text information into a sequence of digital data that is stored in data blocks. Editing functions, such as inserting, deleting, moving, or copying, are easily accomplished by manipulating these data blocks. The actual text is commonly displayed on a display screen to the text editor operator or user so that the operator may see the results of the commands given to the text editor and the actions taken by the text editor in response to these commands.

Whereas various means are known in the art for splicing together sections of digitized audio data as desired, the systems frequently suffer from a drawback uniquely associated with the audio aspect of the data and the human interaction with this data during the editing process.

Numerous digital systems have been provided for facilitating a user friendly interface and system for effecting editing of digitized audio data under control of a personal computer. Among these are the systems and interfaces disclosed in the following references.

IBM Technical Disclosure Bulletin, Volume 30, No. 12, May 1988, p. 358 discloses the primary components of an audio editor system in which the present invention may find utility. Such a system includes hardware and software components providing for stand alone operation in an audio capture and editing mode as well as in other environments.

IBM Technical Disclosure Bulletin, Volume 31, No. 9, February 1989, p. 46 includes a description of an audio editor including a display screen format and description thereof.

IBM Technical Disclosure Bulletin, Volume 30, No. 10, March 1988, p. 286 describes a logical structure for audio object storage.

IBM Technical Disclosure Bulletin, Volume 10, March 1988, p. 355 describes characteristics of a user interface for displaying audio volume information.

IBM Technical Disclosure Bulletin, Volume 30, No. 12, May 1988, p. 21 describes a method for manipulating segments of digitized audio in a simple manner.

IBM Technical Disclosure Bulletin, Volume 30, No. 10, March 1988, P. 351 describes a method for providing a Plurality of levels oi audio object display required for supporting a wide variety of audio editing functions.

IBM Technical Disclosure Bulletin, Volume 30, No. 10, March 1988, p. 270 describes a method for presenting a non-changing display structure allowing complex functions of audio editing to be presented.

IBM Technical Disclosure bulletin, Volume 30, No. 10, March 1988, p. 383 describes a method for representing programs and logical connections established within an audio signal processor in an audio editor.

IBM Technical Disclosure Bulletin, Volume 30, No. 10, March 1988, p. 367 describes a method allowing a user to easily create and modify simple and complex signal processor setups for accomplishing various audio signal processor setups.

It should be noted that a concept somewhat similar to the present invention is known in windowing display applications wherein cursor movement into a window initiates changes in the graphic characteristics of the frame of that window so as to provide more prominence, visually, to the active window on the display.

It is desirable in an audio editing system which permits sound mixing from a plurality of digitized audio objects to display information relating to these operations in such a manner as to allow a user of such a system to easily distinguish displayed information pertaining to each audio object.

Therefore, in accordance with the present invention there is provided a data processing system comprising: means for simultaneously displaying information associated with a plurality of data sets; means for selecting a data set from the plurality of data sets to be active; and means for uniquely visually identifying displayed data pertaining to the selected data set.

In a preferred form of the invention the means for uniquely visually identifying the displayed information is colour and the system means for arranging information associated with each data set in a columnar table format.

In accordance with another aspect of the invention there is provided a method for facilitating user ability to distinguish displayed information associated with a particular data set from information associated with a plurality of data sets when information associated with the plurality of data sets is simultaneously displayed, the method comprising the steps of: assigning unique visual characteristics to each of the plurality of data sets; displaying information pertinent to a user selected one of the plurality of data sets using the visually unique characteristics; and displaying information pertinent to all other of the plurality of data sets using visually neutral identifying characteristics.

The present invention enables easy distinction by a user of displayed information pertaining to a particular audio object by uniquely, graphically associating characteristics with each audio object. When implemented using a colour monitor, a combination of unique colour assignments for highlighting are used to distinguish information by audio object. When implemented using a monochrome monitor, variations in grey tones are used to distinguish information by audio object to which it pertains.

The invention will be better understood from the description which follows, taken in connection with the accompanying drawings wherein:

Fig. 1 is a schematic block diagram of a system including means for editing audio objects;

Fig. 2 illustrates the basic format of an audio editor table screen format display;

Fig. 3 illustrates an exemplary screen format for a single audio object;

Fig. 4 illustrates an exemplary screen format for a second audio object;

Fig. 5 illustrates an exemplary split screen format with information pertaining to two audio objects when the first is active;

Fig. 6 illustrates an exemplary split screen format with information pertaining to two audio objects when the second is active;

Fig. 7 illustrates a screen display with a sub-menu displayed; and

Fig. 8 is a flow chart of logic executed by the audio editor display routine.

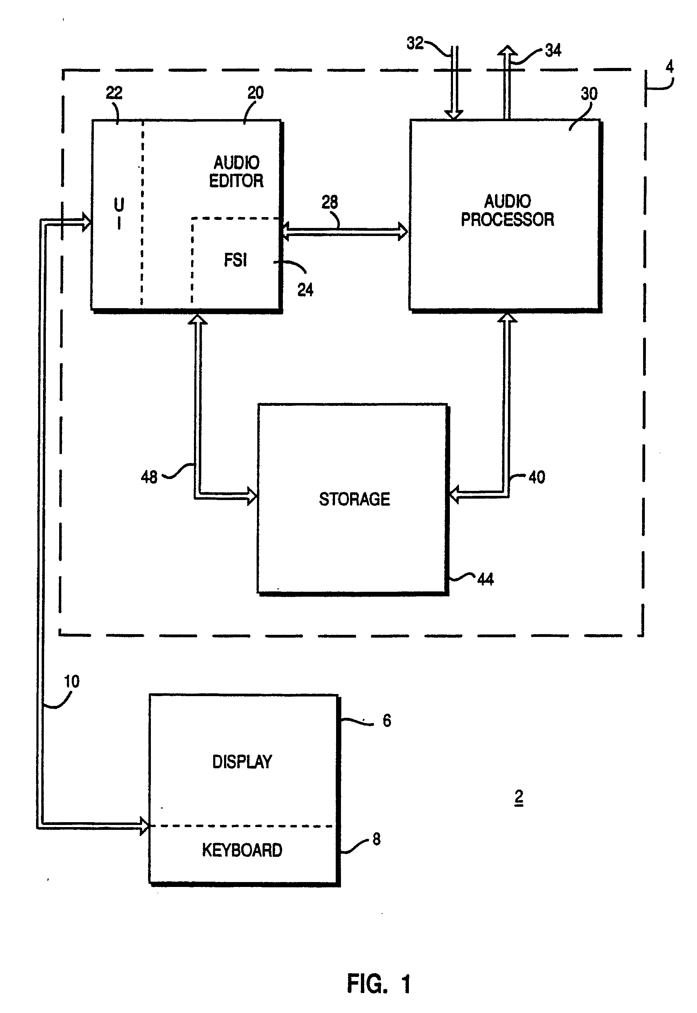

Fig. 1 illustrates a data processing system indicated generally at 2, as including a processor 4, a display 6, and keyboard 8. A bidirectional bus 10 connects the console, including display 6 and keyboard 8 to data processor 4. Specifically, as pertains to the present invention, bus 10 is connected to audio editor 20, which includes a user interface 22 which will be described in more detail below and a file system interface 24.

Audio editor 20 is bidirectionally connected via line 28 to audio processor 30 which receives analog audio input over line 32 and outputs analog audio data over line 34. Audio processor 30, among multiple functions, converts analog audio data, which may be voice, music or stereo, to digital data for processing by other components of data processing system 2.

A bidirectional connection 40 exists between audio processor 30 and system storage 44. It will be understood by those having skill in the art, that in this simplified schematic illustration, storage 44 may represent a variety of storage media and types such as disks, random access memory (RAM) and intermediate buffers. Similarly, a bidirectional connection 48 is provided between audio editor 20 and storage 44.

In the exemplary embodiment being described, all audio editing functions are performed utilizing a columnar table, hereinafter referenced as audio table, displayed on the screen of monitor 6, in 80 column text mode.

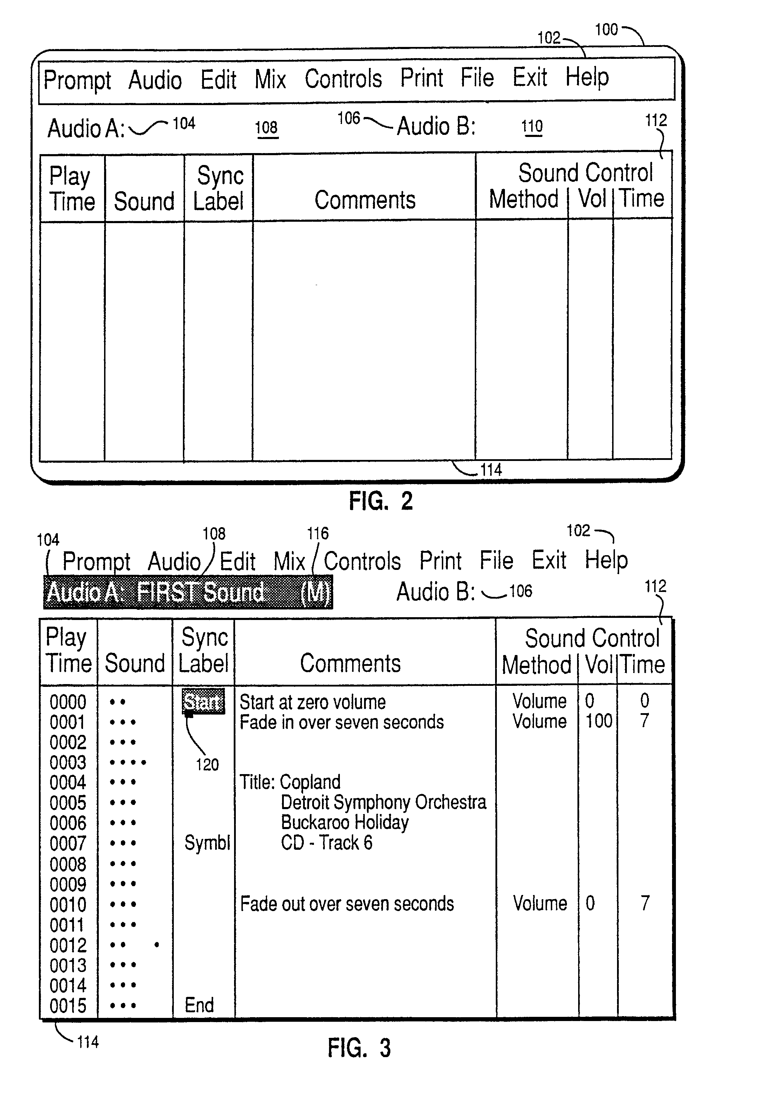

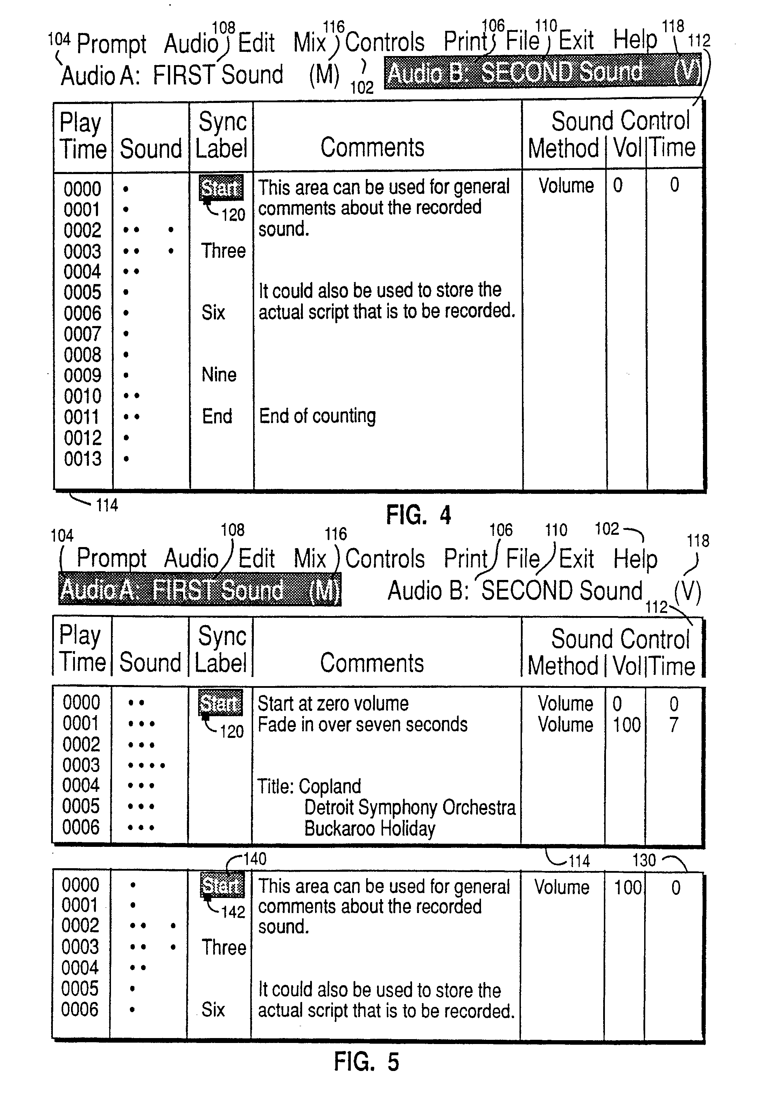

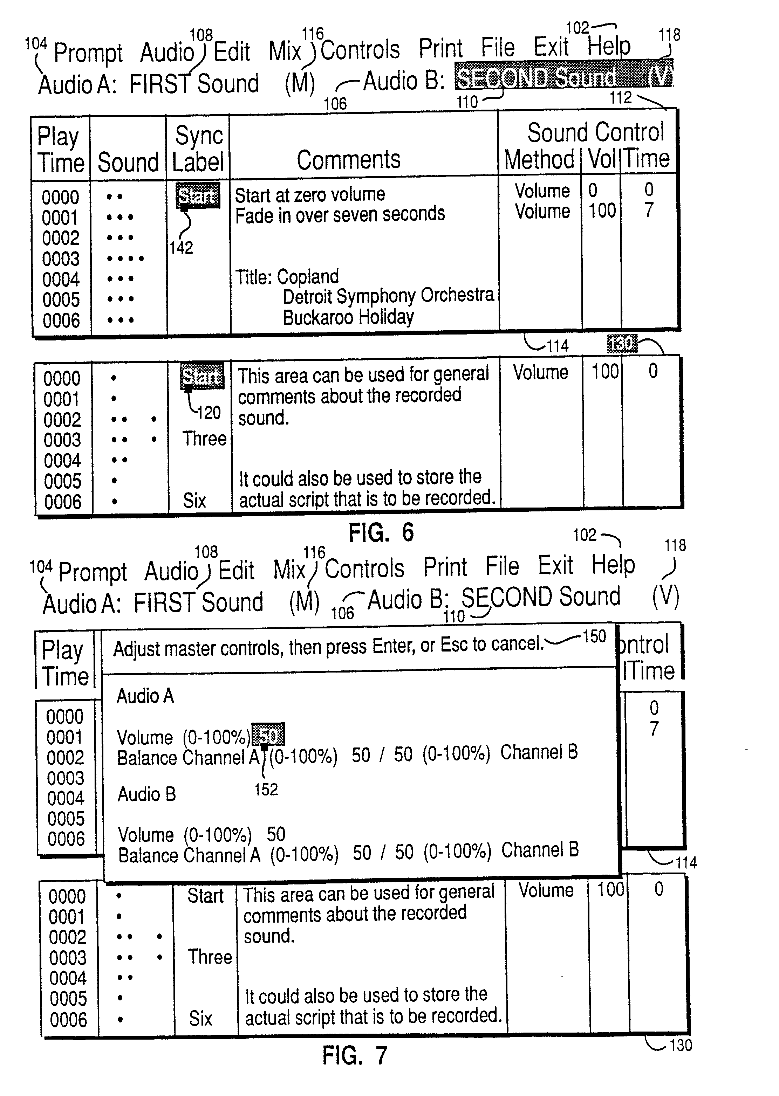

Fig. 2 illustrates that screen format. The outline of the hardware display device around the video screen is indicated at 100. An action bar 102 is provided for enabling the user to select any of the action groups indicated, Prompt, Audio, Edit, Mix, Controls, Print, File, Exit and Help. Labels Audio A: and Audio B:, shown at 104 and 106 respectively, indicate the first and second audio files which may be edited in this illustrative system which provides for simultaneous editing operations to be performed on any two audio objects. User chosen names are placed in name fields 108 for Audio A and 110 for Audio B. Column headings Play Time, Sound, synch Label, Comments and Sound Control -Method, Vol and Time- are indicated generally by reference numeral 112. Column headings 112 identify entries which will be placed in audio table 114.

Sound is handled in time lines of one second increments. Volume level is indicated for each sound line. Additionally, each line in the audio table may contain user supplied comments for annotation as well as sound controls for volume adjustment. During an edit operation when sounds from two audio objects are to be mixed, such as combining a voice recording with background music, synchronization marks for aligning each audio track to the other facilitate mixing.

The present invention, those skilled in the art will appreciate, is not limited to implementation in systems providing audio editing. The inventive concept is applicable to any system permitting the simultaneous display of information pertaining to a plurality of data sets. Thus, while the present invention is being described having reference to a preferred embodiment in an audio editor system, such explanation and description is in no way intended to limit the invention as subsequently claimed.

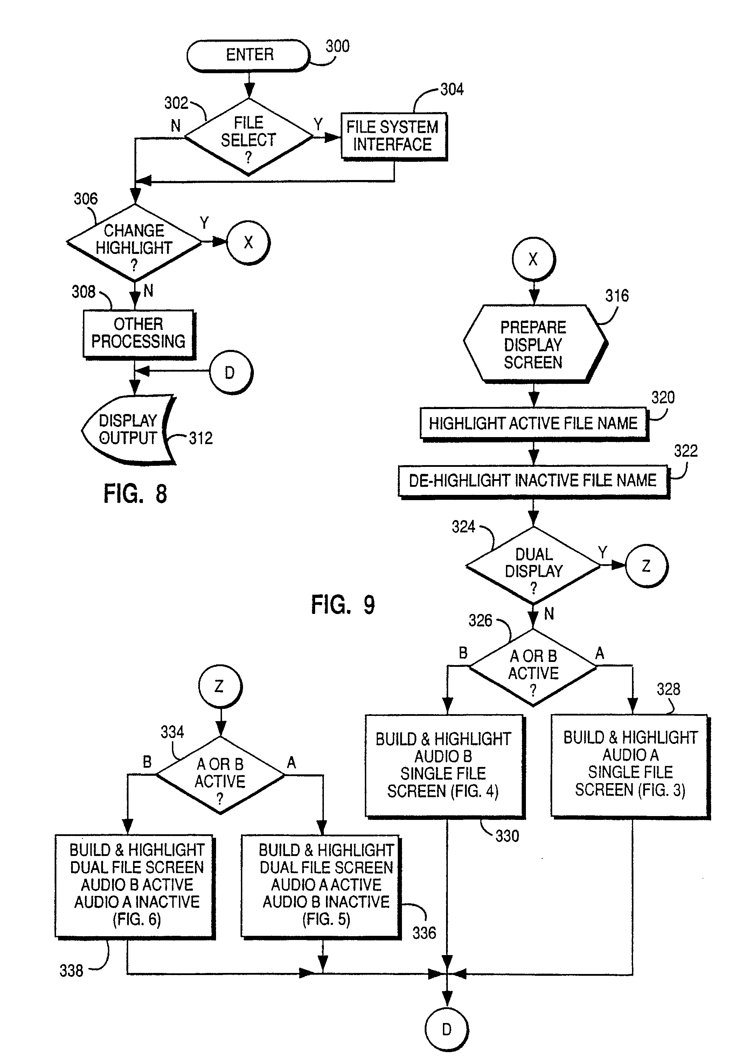

Figs. 3-7 to which attention is now invited, are provided for illustrating changes made to the general screen format shown in Fig. 2, which appears on display 6 when a user of a system embodying the present invention, interactively performs editing operations. In this exemplary embodiment, two files may be edited simultaneously, Audio A and Audio B as shown at 104 and 106 in Fig. 2.

While specific foreground and background colours are described in connection with Figs. 3-7, it should be understood that it is the relationship and uniqueness of the colours associated with a particular audio object and not the colours themselves that provide the advantages of the invention. For ease of understanding Figs. 3-7, "highlighting" is depicted therein by shading (where possible) those sections of the Figs. representing the visually unique display feature of the present invention.

Refer to Fig. 3, which is the first screen format displayed to a user after selecting an Audio A file, FIRST Sound, for editing. In this example, FIRST Sound is a music audio data file, and such is indicated by the file type field 116 contents M. Pertinent information relating to Audio A is highlighted and that relating to Audio B is de-highlighted. Note, no Audio B object has been requested, as indicated by the blank in the Audio B name field 110.

By way of example, on a colour display, the Audio A highlight is assigned to be light white on blue. The field space, Synch Label, in which a conventional active cursor 120 is located, is displayed using the same graphic characteristics as the Audio A label 104 and name field 108. As used herein, graphic characteristics includes colour used for highlighting. All other field spaces, Play Time, Comments and Sound Control are displayed in neutral colours. Additional neutral colours are used to display information representing a volume gauge in the Sound field.

Heading text and data fields are neutral colours, that is, action bar 102 entries and column headings 112 are displayed in colours which have not been uniquely assigned to either Audio A or Audio B. All such colours are pre-assigned by the audio editor 20, but users are provided an opportunity to select their own colours for assignment to Audio A and Audio B.

In the present example, dark grey on black has been chosen for use when displaying information in de-highlighed mode. In Fig. 3 the Audio B label 106 and audio table outline 114 are displayed de-highlighted.

The processing of audio data as enabled by the system in which the present invention is embodied includes capture, editing and storage of digitized audio data. A primary purpose of this system is to mix two audio objects thereby producing a third audio object. Information pertaining to audio objects, when displayed, may look very similar. That is, the audio table of Fig. 2 would have entries in the various columns thereof that are not inherently self distinguishing. These entries per se may sometimes be exactly alike; and if there is nothing in the Comments column, a user would have difficulty in readily perceiving with which audio object he/she is working.

Further details of the editing of audio data may be found in the Applicant's copending European patent application of even date entitled "Audio Editing System" (ref. AT9-89-050/rgl), priority for which is claimed from US application 368,474 filed 19 June 1989. A copy of that copending European application is included with the present application for inclusion in the EPO dossier for the present application.

Fig. 4 is quite similar to Fig. 3 except that it is depicted as it would appear after a user has chosen a second audio object for editing, in this case, Audio B. The name given by the user is SECOND Sound. This name appears in highlight in file name field 110. Similarly highlighted is file type field 118, which contains V indicating that SECOND Sound is a voice audio data file.

Because the user is now editing Audio B, information pertaining to Audio B is highlighted, i.e. displayed, using its exemplary pre-assigned colours light green on white. Audio A information is de-highlighted as previously described in connection with Fig. 3. Note that the Synch Label field of audio table 114 where cursor 120 is located, is also highlighted using the unique colours assigned to Audio B. No information about Audio A is shown in Fig. 4.

Fig. 5 is illustrative of a point in time when the present invention is particularly advantageous. In the audio editing system in which the present invention finds utility, it is possible to simultaneously perform edit operations on two audio objects. Note that the audio table is now split into two sections 114 and 130. Only one set of column headings 112 is shown; however, those having skill in the art will appreciate that it would be possible if so desired to repeat the display of the audio table column headings.

Audio table 114 in Fig. 5 contains the same first six lines as depicted in Fig. 3 which showed a single file display where Audio A was active. Similarly, audio table 130 of Fig. 5 contains the same first six lines as audio table 114 in Fig. 4 which showed a single file display with Audio 8 active.

In Fig. 5, the user has selected to edit the Audio A file FIRST Sound. Audio editor 20 has detected that selection, which may by example have been made using a "hot key"; and Audio A is deemed active. Information pertaining to Audio A, name field 108 and the field in the Synch Label column containing cursor 120, is highlighted as described in connection with Fig. 3. Extra emphasis is provided by also highlighting the outline of audio table 114 using Audio A unique colours. However, information pertaining to Audio B is de-highlighted so as to easily focus the user's attention on that portion, 114, of the display screen, containing information pertaining to Audio A.

Because the present system enables simultaneous auditing of two audio files, it is important that the user be informed where he or she left the inactive audio object. The Synch Label field 140 of audio table 130, where active cursor 120 was located when Audio B was active, remains highlighted with the Audio B unique colours. In the present embodiment a "ghost" cursor 142 is displayed in the highlighted field of non active audio file audio table 130.

Refer now to Fig. 6 which is similar to Fig. 5 except that it represents the contents of the screen of monitor 6 when the user has selected Audio B as the active file. Thus, information pertinent to Audio B, as indicated at 110, 118, 120 and 130, is highlighted, that is, displayed in the system unique colours assigned to Audio B previously noted, while all information pertaining to Audio A is de-highlighted.

However, as explained in connection with Fig. 5, the field where active cursor 120 was positioned when Audio A was last active, remains highlighted in Audio A colours. Similarly again, as described in connection with Fig. 5, in Fig. 6 the outline of the Audio B audio table 130 is displayed using Audio B highlight colours.

It is known in the prior art, that a user may select an action from the menu of actions presented in action bar 102 in various ways. In the audio editing system of the present invention, selecting various actions causes various alterations in the display. For instance, an action selected using the cursor from action bar 102 causes an action group pull down menu to be displayed. Some action groups allow the user to exercise further options resulting in pop-up displays. For the sake of simplicity, these various display expedients are grouped together under the heading sub-menus. The importance of sub-menus, with respect to the present invention, resides in their containing information pertinent to the active audio object. Thus, all fields in sub-menus specific to either audio object, Audio A, Audio B, are highlighted using those unique colours pre-assigned to that file.

In Fig. 7, if the user selects the Controls action group from action bar 102, the sub-menu shown at 150 in Fig. 7 is displayed so as to overlay both audio tables 114, 130. As shown, sub-menu cursor 152 is located on the Volume field for the Audio A file First Sound. Thus Audio A is the active file.

Audio B may be made active by using a hot key or cursor motion, in accordance with the present invention. That selection by the user is detected within audio editor 20.

When cursor 152 is in part of sub-menu 150 relating to Audio A, the cursored values are displayed in Audio A colours. When cursor 152 is located on a field within the Audio B section of sub-menu 150, the pertinent information is displayed in the unique colours assigned to Audio B.

Refer now to Fig. 8 for a more detailed description of the logic executed by the audio editor user interface 20 to Fig. 1. It will be recalled from the description of Fig. 1 that bidirectional bus 10 enables user inputs to audio editor 20 and audio editor outputs, including commands to display 6.

Entry point 300 represents that point at which audio editor user interface 22 receives a user request over bus 10 (Fig. 1). At step 302, the determination is made whether the user is requesting a particular audio file. If yes, the action necessary to access a particular file occurs at step 304 utilizing audio editor file system interface 24 which is not described in any greater detail as it is not of particular significance to an understanding of the present invention.

If the user is not requesting access to another file, a determination is made at step 306, whether the user wants to change highlights. If there are no changes in highlighting colours or the like requested, any other processing, not pertinent to an understanding of the present invention, occurs as indicated at step 308. At step 312, the audio editor returns its output to display 6 over bus 10.

Returning to step 306, if highlighting changes are requested by the user, a branch is taken to display preparation process 316 for preparing and building a display with appropriate display commands, including selected changes thereto, highlighting.

It bears repeating that the present invention does not require that specific colours be selected to uniquely, visually identify displayed information as a function of the particular data set to which it pertains. Nor does the novelty of this invention reside in the particulars of the display commands utilized. Rather, it is the concept of graphically distinquishing displayed information so as to facilitate the user interface to a data processing system which permits information pertinent to a plurality of data objects to be simultaneously displayed.

At step 320, appropriate commands are prepared to highlight the name of the active file as described having reference to the examples shown in Fig. 3-7. Similarly, in step 322, the inactive file name is de-highlighted in an analogous manner.

A determination is made at step 324 whether the user has requested a dual display; that is, simultaneous display of two audio files. If the user has not indicated a choice of two audio files, the audio editor logic determines whether audio file A or B is active at step 326. If the user has chosen file A, at step 328 logic executes commands for building and highlighting an Audio A single file screen with highlighting as described in connection with Fig. 3. The commands to display output are returned over bus 10 at step 312.

Returning to step 326, if B is the active file chosen by the user, at step 330, appropriate commands are executed to build and highlight and Audio B single file screen such as illustrated and described in connection with Fig. 4. Again, at step 312, those commands are passed to a display device.

Returning now to step 324. If the choice of the user was to have a dual display with information pertaining to both audio files A and B, a determination is made at step 334, which of audio files A and B is the active file chosen by the user.

At step 336, commands are executed for building and highlighting a dual file screen with Audio A active file and Audio B the inactive file such as shown and described in connection with Fig. 5.

If B is the active file chosen in a dual display situation, of step 338, logic causes the build and highlighting of a dual file screen with Audio B active and Audio A inactive, including appropriate highlighting, as shown and described in connection with Fig. 6.

While the present invention had been described having reference to a particular illustrative embodiment, references have been made to other applicable environments in which the invention may be advantageous. Those having skill in the art will understand that the above noted and other modifications and minor changes may be made without departing from the scope of the invention as claimed.

## Claims

1. A data processing system comprising:
means for simultaneously displaying information associated with a plurality of data sets;
means for selecting a data set from the plurality of data sets to be active; and
means for uniquely visually identifying displayed data pertaining to the selected data set.

2. Data processing system as claimed in Claim 1 wherein the means for uniquely visually identifying the displayed information is colour.

3. Data processing system as claimed in Claim 1 or Claim 2 comprising:
means for arranging information associated with each data set in a columnar table format.

4. Data processing system as claimed in Claim 3 wherein the means for arranging comprises:
means for indicating a cursor containing a field in the columnar table using data set unique visual characteristics.

5. Data processing system as claimed in any preceding claim wherein the plurality of data sets comprises:
a first digitized audio file; and
a second digitized audio file.

6. Data processing system as claimed in Claim 5 wherein:
each of the first and second digitized audio files contains information from analog music, voice or stereo data.

7. A method for facilitating user ability to distinguish displayed information associated with a particular data set from information associated with a plurality of data sets when information associated with the plurality of data sets is simultaneously displayed, comprising:
assigning unique visual characteristics to each of the plurality of data sets;
displaying information pertinent to a user selected one of the plurality of data sets using the visually unique characteristics; and
displaying information pertinent to all other of the plurality of data sets using visually neutral identifying characteristics.

8. A method as claimed in Claim 7 wherein the visually unique characteristics are colour.

9. A method as claimed in Claim 7 or Claim 8 wherein each of the displaying steps includes:
arranging information associated with each data set in a columnar table format.

10. A method as claimed in Claim 9 wherein the arranging step includes:
indicating a cursor containing field in the columnar table using data set unique visual characteristics.

FIG. 1

Prompt  Audio  Edit  Mix  Controls  Print  File  Exit  Help

Audio A: ⌒104        108      106 ⌒Audio B:      110        112

| Play Time | Sound | Sync Label | Comments | Sound Control | | |
|-----------|-------|------------|----------|---------------|---|---|
| | | | | Method | Vol | Time |
| | | | | | | |

114

**FIG. 2**

Prompt  Audio / Edit  Mix / Controls  Print  File  Exit  Help

Audio A: FIRST Sound    (M)        Audio B: ⌒106        112

| Play Time | Sound | Sync Label | Comments | Sound Control | | |
|-----------|-------|------------|----------|---------------|---|---|
| | | | | Method | Vol | Time |
| 0000 | • • | Start | Start at zero volume | Volume | 0 | 0 |
| 0001 | • • • | | Fade in over seven seconds | Volume | 100 | 7 |
| 0002 | • • • | | | | | |
| 0003 | • • • • | 120 | | | | |
| 0004 | • • • | | Title: Copland | | | |
| 0005 | • • • | | Detroit Symphony Orchestra | | | |
| 0006 | • • • | | Buckaroo Holiday | | | |
| 0007 | • • • | Symbl | CD - Track 6 | | | |
| 0008 | • • • | | | | | |
| 0009 | • • • | | | | | |
| 0010 | • • • | | Fade out over seven seconds | Volume | 0 | 7 |
| 0011 | • • • | | | | | |
| 0012 | • • • | | | | | |
| 0013 | • • • | | | | | |
| 0014 | • • • | | | | | |
| 0015 | • • • | End | | | | |

114

**FIG. 3**

104 Prompt Audio 108 Edit Mix 116 Controls Print 106 File 110 Exit Help 118 112

Audio A: FIRST Sound (M) 102 | Audio B: SECOND Sound (V)

| Play Time | Sound | Sync Label | Comments | Sound Control | | |
|---|---|---|---|---|---|---|
| | | | | Method | Vol | Time |
| 0000 | • | Start | This area can be used for general | Volume | 0 | 0 |
| 0001 | • | ⌐120 | comments about the recorded | | | |
| 0002 | • • • | | sound. | | | |
| 0003 | • • • | Three | | | | |
| 0004 | • • | | | | | |
| 0005 | • | | It could also be used to store the | | | |
| 0006 | • | Six | actual script that is to be recorded. | | | |
| 0007 | • | | | | | |
| 0008 | • | | | | | |
| 0009 | • | Nine | | | | |
| 0010 | • • | | | | | |
| 0011 | • • | End | End of counting | | | |
| 0012 | • | | | | | |
| 0013 | • | | | | | |

114

## FIG. 4

104 Prompt Audio 108 Edit Mix 116 Controls Print 106 File 110 Exit 102 Help 118

Audio A: FIRST Sound (M) | Audio B: SECOND Sound 112 (V)

| Play Time | Sound | Sync Label | Comments | Sound Control | | |
|---|---|---|---|---|---|---|
| | | | | Method | Vol | Time |
| 0000 | • • | Start | Start at zero volume | Volume | 0 | 0 |
| 0001 | • • • | ⌐120 | Fade in over seven seconds | Volume | 100 | 7 |
| 0002 | • • • | | | | | |
| 0003 | • • • • | | | | | |
| 0004 | • • • | | Title: Copland | | | |
| 0005 | • • • | | Detroit Symphony Orchestra | | | |
| 0006 | • • • | | Buckaroo Holiday | | | |

140 · 114 · 130

| Play Time | Sound | Sync Label | Comments | Sound Control | | |
|---|---|---|---|---|---|---|
| | | | | Method | Vol | Time |
| 0000 | • | Start | This area can be used for general | Volume | 100 | 0 |
| 0001 | • | ⌐142 | comments about the recorded | | | |
| 0002 | • • • | | sound. | | | |
| 0003 | • • • | Three | | | | |
| 0004 | • • | | | | | |
| 0005 | • | | It could also be used to store the | | | |
| 0006 | • | Six | actual script that is to be recorded. | | | |

## FIG. 5

104 Prompt  Audio 108 Edit  Mix 116 Controls  Print  File  Exit  Help 102  118
Audio A:  FIRST Sound    (M)    106  Audio B:  SECOND Sound    110    (V)  112

| Play Time | Sound | Sync Label | Comments | Sound Control | | |
|---|---|---|---|---|---|---|
| | | | | Method | Vol | Time |
| 0000 | • • | Start | Start at zero volume | Volume | 0 | 0 |
| 0001 | • • • | | Fade in over seven seconds | Volume | 100 | 7 |
| 0002 | • • • | 142 | | | | |
| 0003 | • • • • | | | | | |
| 0004 | • • • | | Title: Copland | | | |
| 0005 | • • • | | Detroit Symphony Orchestra | | | |
| 0006 | • • • | | Buckaroo Holiday | | | |

114  130

| 0000 | • | Start | This area can be used for general | Volume | 100 | 0 |
|---|---|---|---|---|---|---|
| 0001 | • | | comments about the recorded | | | |
| 0002 | • • • | 120 | sound. | | | |
| 0003 | • • • | Three | | | | |
| 0004 | • • | | | | | |
| 0005 | • | | It could also be used to store the | | | |
| 0006 | • | Six | actual script that is to be recorded. | | | |

## FIG. 6

104 Prompt  Audio 108 Edit  Mix 116 Controls  Print  File  Exit  Help  102  118
Audio A:  FIRST Sound    (M)  106  Audio B:  SECOND Sound    110    (V)

| Play Time | Adjust master controls, then press Enter, or Esc to cancel. 150 | ntrol Time |
|---|---|---|

Audio A

0000
0001  Volume (0-100%) 50
0002  Balance Channel A (0-100%)  50 / 50 (0-100%)  Channel B
0003
0004  Audio B          152
0005
0006  Volume (0-100%)  50
Balance Channel A (0-100%)  50 / 50 (0-100%)  Channel B

0
7

114

| 0000 | • | Start | This area can be used for general | Volume | 100 | 0 |
|---|---|---|---|---|---|---|
| 0001 | • | | comments about the recorded | | | |
| 0002 | • • • | | sound. | | | |
| 0003 | • • • | Three | | | | |
| 0004 | • • | | | | | |
| 0005 | • | | It could also be used to store the | | | |
| 0006 | • | Six | actual script that is to be recorded. | | | |

130

## FIG. 7

FIG. 8

FIG. 9